# EUROPEAN PATENT APPLICATION

(11) **EP 4 819 690 A1**
(43) Date of publication of application: **07.10.2026**
(21) Application number: 25844566.7
(22) Date of filing: 30.04.2025
(51) Int. Cl.: H04W 40/02, H04L 61/4511, H04W 4/00, H04W 40/24, H04W 60/00, H04W 76/10, H04W 84/10

(54) **WIRELESS COMMUNICATION SYSTEM AND COMMUNICATION METHOD**

(30) Priority: 24.07.2024 JP 2024118865
(71) Applicant: Icom Incorporated, Osaka 547-0004 (JP)
(72) Inventor: NAKANO, Akira, Osaka-shi, Osaka 547-0004 (JP); TOMITA, Takuji, Osaka-shi, Osaka 547-0004 (JP); MIYAKOSHI, Yoshiaki, Osaka-shi, Osaka 547-0004 (JP); MATSUOKA, Yumi, Osaka-shi, Osaka 547-0004 (JP)
(74) Representative: Isarpatent
(86) International application number: PCT/JP2025/016418
(87) International publication number: WO 2026/023190

(57) **Abstract**

A wireless communication system (1) includes a closed system (11) and a cloud system (21). The closed system (11) includes a call control server (12) that controls communication between wireless stations (41, 42) each connected to a closed network (10) or the Internet network (20), a closed-system gateway server (13) that transmits a registration request from the wireless station (41) to the call control server (12) and transmits a registration response from the call control server (12) to the wireless station (41), and a closed-system DNS server (14) that performs name resolution when receiving a name resolution request from the wireless station (41). The cloud system (21) includes a cloud-system gateway server (22) that transmits a registration request from the wireless station (42) to the call control server (12) and transmits a registration response from the call control server (12) to the wireless station (42).

## Description

### Technical Field

The present disclosure relates to a wireless communication system and a communication method.

### Background Art

In order to enable communication devices connected to different networks, such as a local area network (LAN) and a wide area network (WAN), to communicate with each other, a gateway device is installed between the different networks. Patent Literature 1 discloses an example of a communication device that communicates with another communication device connected to a different network via a gateway device.

A voice communication system disclosed in Patent Literature 1 includes a gateway device that connects an LAN and a long term evolution (LTE), which is a communication network for mobile phones, to each other, and relays communication between a LAN communication terminal connected to the LAN and an LTE communication terminal connected to the LTE.

### Citation List

### Patent Literature

Patent Literature 1: International Publication No. WO 2017/006833

### Summary of Invention

### Technical Problem

The LTE communication terminal disclosed in Patent Literature 1 can communicate with the LAN communication terminal, but cannot communicate with a communication terminal connected to the Internet via the LAN.

The present disclosure has been made in consideration of the above-described circumstances, and an objective of the present disclosure is to provide a wireless communication system and a communication method that enable communication between a wireless station connected to the Internet network and a wireless station connected to a closed network.

### Solution to Problem

In order to achieve the above-described objective, a wireless communication system according to a first aspect of the present disclosure includes a closed system installed in a closed network and a cloud system installed in an Internet network, and the closed system and the cloud system are communicably connected to each other, wherein
the closed system includes
   a call control server to control communication between a plurality of wireless stations, each of the plurality of wireless stations being connected to the closed network or the Internet network,
   a closed-system gateway server to retain association between a wireless station of the plurality of wireless stations and the call control server, when receiving a registration request or voice data from the wireless station connected to the closed network, transmit the registration request or the voice data to the call control server associated with the wireless station, and when receiving a registration response or voice data from the call control server, transmit the registration response or the voice data to the wireless station being a destination, and
   a closed-system domain name system server to, when receiving a name resolution request for a domain name of one of closed-system devices included in the closed system or one of cloud-system devices included in the cloud system from the wireless station connected to the closed network, perform name resolution for the domain name included in the name resolution request and transmit, to the wireless station, a name resolution response including an address corresponding to the domain name, and
the cloud system includes
   a cloud-system gateway server to retain association between a wireless station of the plurality of wireless stations and the call control server, when receiving a registration request or voice data from the wireless station connected to the Internet network, transmit the registration request or the voice data to the call control server associated with the wireless station, and when receiving a registration response or voice data destined to the wireless station connected to the Internet network from the call control server, transmit the registration response or the voice data to the wireless station.

When receiving the name resolution request for the closed-system gateway server being one of the closed-system devices from the wireless station connected to the closed network, the closed-system domain name system server preferably transmits, to the wireless station, the name resolution response including an address of the closed-system gateway server.

The closed system preferably further includes, as one of the closed-system devices, a closed-system activation server to, when accepting an activation request from the wireless station connected to the closed network, register activation information in storage devices respectively installed in the closed system and the cloud system, the activation information including information for uniquely identifying the wireless station.

When receiving the name resolution request for the closed-system activation server being one of the closed-system devices from the wireless station connected to the closed network, the closed-system domain name system server preferably transmits, to the wireless station, the name resolution response including an address of the closed-system activation server.

The cloud system preferably further includes, as one of the cloud-system devices, a cloud-system activation server to, when accepting an activation request including unique information for uniquely identifying the wireless station from the wireless station connected to the Internet network, register activation information including the unique information in storage devices respectively installed in the closed system and the cloud system.

The cloud system preferably further includes, as one of the cloud-system devices, a cloud-system provisioning server to, when receiving a provisioning request from the wireless station connected to the closed network, transmit a provisioning response including a domain name of the closed-system gateway server to the wireless station connected to the closed network, and when receiving a provisioning request from the wireless station connected to the Internet network, transmit a provisioning response including a domain name of the cloud-system gateway server to the wireless station connected to the Internet network.

A configuration is preferably provided in which
the cloud system further includes a dedicated connection device to connect, via a dedicated line, each of the cloud-system devices to the closed-system devices and the closed network,
the dedicated connection device transfers, to one of the cloud-system devices, data received from the wireless station connected to the closed network or one of the closed-system devices in accordance with a type of the data, and
when receiving the name resolution request for a domain name of the cloud-system provisioning server from the wireless station, the closed-system domain name system server transmits, to the wireless station, the name resolution response including an address of the dedicated connection device.

A configuration is preferably provided in which
the cloud system further includes a dedicated connection device to connect, via a dedicated line, each of the cloud-system devices to the closed-system devices and the closed network, and
the dedicated connection device transfers, to one of the cloud-system devices, data received from the wireless station connected to the closed network or one of the closed-system devices in accordance with a type of the data.

A configuration is preferably provided in which
the cloud system further includes an endpoint device to connect each of the cloud-system devices to the Internet network,
when receiving a name resolution request for one of the cloud-system devices from the wireless station connected to the Internet network, an Internet domain name system server installed in the Internet network transmits, to the wireless station, a name resolution response including an address of the endpoint device, and
the endpoint device transfers, to one of the cloud-system devices, data received from the wireless station connected to the Internet network in accordance with a type of the data.

A configuration is preferably provided in which
the call control server controls communication between at least one first wireless station and at least one second wireless station, the at least one first wireless station being connectable to both the closed network and the Internet network, the at least one second wireless station being connectable to the closed network alone, and
the closed system further includes a closed-system provisioning server to, when receiving a provisioning request from the at least one second wireless station connected to the closed network, transmit a provisioning response including an address of the call control server to the wireless station.

The call control server preferably controls communication of an associated wireless station of the plurality of wireless stations regardless of whether the associated wireless station is connected to the closed network or the Internet network.

A configuration is preferably provided in which
the wireless communication system includes a plurality of the closed systems to be communicably connected to each other via the cloud system, and
when the call control server included in one of the plurality of closed systems fails to control communication between the plurality of wireless stations, the call control server included in another one of the plurality of closed systems controls the communication between the plurality of wireless stations.

A communication method according to a second aspect of the present disclosure is to be executed by a wireless communication system. The wireless communication system includes a closed system installed in a closed network and a cloud system installed in an Internet network. The closed system and the cloud system are communicably connected to each other. The closed system includes a call control server, a closed-system gateway server, and a closed-system domain name system server. The call control server is configured to control communication between a plurality of wireless stations each connected to the closed network or the Internet network. The closed-system gateway server is configured to retain association between a wireless station of the plurality of wireless stations and the call control server. The closed-system domain name system server is configured to perform name resolution processing. The cloud system includes a cloud-system gateway server to retain association between a wireless station of the plurality of wireless stations and the call control server. The communication method includes:
by the closed-system gateway server,
   in response to receiving a registration request or voice data from the wireless station connected to the closed network, transmitting the registration request or the voice data to the call control server associated with the wireless station, and in response to receiving a registration response or voice data from the call control server, transmitting the registration response or the voice data to the wireless station being a destination;
by the closed-system domain name system server,
   in response to receiving a name resolution request for a domain name of one of closed-system devices included in the closed system or one of cloud-system devices included in the cloud system from the wireless station connected to the closed network, performing name resolution for the domain name included in the name resolution request and transmitting, to the wireless station, a name resolution response including an address corresponding to the domain name; and
by the cloud-system gateway server,
   retaining association between a wireless station of the plurality of wireless stations and the call control server, in response to receiving a registration request or voice data from the wireless station connected to the Internet network, transmitting the registration request or the voice data to the call control server associated with the wireless station, and in response to receiving a registration response or voice data destined to the wireless station connected to the Internet network from the call control server, transmitting the registration response or the voice data to the wireless station.

### Advantageous Effects of Invention

In the wireless communication system according to the present disclosure, the closed-system domain name system server performs name resolution, the closed-system gateway server transmits a registration request or voice data to the call control server associated with the wireless station, and the cloud-system gateway server transmits the registration request or the voice data to the call control server associated with the wireless station. This enables communication between the wireless station connected to the closed network and the wireless station connected to the Internet network.

### Brief Description of Drawings

FIG. 1 is a block diagram illustrating a configuration of a wireless communication system according to Embodiment 1;
FIG. 2 is a block diagram illustrating a configuration of each of wireless stations in Embodiment 1;
FIG. 3 is a flowchart illustrating an example of startup processing performed by each of the wireless stations in Embodiment 1;
FIG. 4 is a sequence diagram illustrating an example of activation processing performed by the wireless communication system according to Embodiment 1;
FIG. 5 is a sequence diagram illustrating an example of provisioning processing performed by the wireless communication system according to Embodiment 1;
FIG. 6 is a sequence diagram illustrating an example of registration processing performed by the wireless communication system according to Embodiment 1;
FIG. 7 is a sequence diagram illustrating another example of the activation processing performed by the wireless communication system according to Embodiment 1;
FIG. 8 is a sequence diagram illustrating another example of the provisioning processing performed by the wireless communication system according to Embodiment 1;
FIG. 9 is a sequence diagram illustrating another example of the registration processing performed by the wireless communication system according to Embodiment 1;
FIG. 10 is a sequence diagram illustrating an example of call establishment processing performed by the wireless communication system according to Embodiment 1;
FIG. 11 is a block diagram illustrating a modified example of the configuration of the wireless communication system according to Embodiment 1;
FIG. 12 is a block diagram illustrating a configuration of a wireless communication system according to Embodiment 2;
FIG. 13 is a sequence diagram illustrating an example of registration processing performed by the wireless communication system according to Embodiment 2;
FIG. 14 is a block diagram illustrating a hardware configuration for implementing a closed system and a cloud system according to the embodiments; and
FIG. 15 is a block diagram illustrating a modified example of the hardware configuration for implementing the closed system and the cloud system according to the embodiments.

### Description of Embodiments

A wireless communication system and a communication method according to embodiments of the present disclosure are described below in detail with reference to the drawings. Components identical or corresponding to each other are provided with the same reference sign in the drawings.

### Embodiment 1

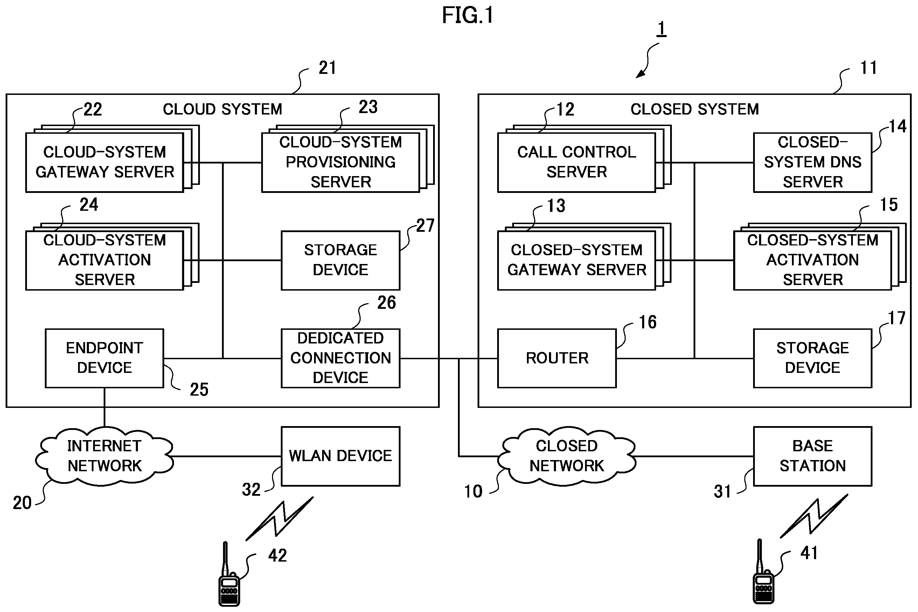

A wireless communication system 1 illustrated in FIG. 1 relays communication between wireless stations 41 and 42 each connected to a closed network 10 or the Internet network 20. In Embodiment 1, the wireless stations 41 and 42 are internet protocol (IP) transceivers that perform voice communication. The wireless stations 41 and 42 have the same configuration and functions. In the example in FIG. 1, the wireless station 41 is connected to the closed network 10 via a base station 31, and the wireless station 42 is connected to the Internet network 20 via a wireless local area network (WLAN) device 32. The WLAN device 32 is, for example, an access point device.

The wireless communication system 1 includes a closed system 11 installed in the closed network 10, and a cloud system 21 installed in the Internet network 20. The closed system 11 includes a call control server 12, a closed-system gateway server 13, a closed-system domain name system (DNS) server 14, a closed-system activation server 15, a router 16, and a storage device 17. The cloud system 21 includes a cloud-system gateway server 22, a cloud-system provisioning server 23, a cloud-system activation server 24, an endpoint device 25, a dedicated connection device 26, and a storage device 27.

The closed system 11 and the cloud system 21 are connected to each other via a dedicated line. The dedicated connection device 26 connects, via the dedicated line, each of cloud-system devices included in the cloud system 21 to closed-system devices included in the closed system 11 and the closed network 10. The closed-system devices are the above-described components of the closed system 11, more specifically, the call control server 12, the closed-system gateway server 13, the closed-system DNS server 14, the closed-system activation server 15, the router 16, and the storage device 17. The cloud-system devices are the components of the cloud system 21, more specifically, the cloud-system gateway server 22, the cloud-system provisioning server 23, the cloud-system activation server 24, the endpoint device 25, the dedicated connection device 26, and the storage device 27. The devices include not only physically existing devices but also virtual devices.

The closed system 11 includes any number of call control servers 12. Each call control server 12 controls communication between the wireless stations 41 and 42, more specifically, performs call control such as transmission and reception of voice signals.

The closed-system gateway server 13 retains association between the wireless station 41 and the call control server 12. As an example, the closed-system gateway server 13 retains a table in which unique information for uniquely identifying the wireless station 41 is associated with an address of the call control server 12. The unique information for uniquely identifying the wireless station 41 is, for example, an international mobile equipment identifier (IMEI), an integrated circuit card identifier (ICCID) that is an identification number of a subscriber identity module (SIM) card inserted to the wireless station 41, or the like.

When receiving a registration request or voice data via the router 16 from the wireless station 41 connected to the closed network 10, the closed-system gateway server 13 transmits the received registration request or voice data to the call control server 12 associated with the wireless station 41. When receiving a registration response or voice data from the call control server 12, the closed-system gateway server 13 transmits the received registration response or voice data via the router 16 to the wireless station 41 that is a destination.

The closed-system DNS server 14 performs name resolution for the closed-system device included in the closed system 11 and the cloud-system device included in the cloud system 21. The closed-system device for which the name resolution is to be performed by the closed-system DNS server 14 is, for example, the closed-system gateway server 13 or the closed-system activation server 15. The cloud-system device for which the name resolution is to be performed by the closed-system DNS server 14 is, for example, the dedicated connection device 26.

Specifically, when receiving, from the wireless station 41 connected to the closed network 10, a name resolution request for a domain name of the closed-system device included in the closed system 11 or the cloud-system device included in the cloud system 21, the closed-system DNS server 14 performs name resolution for the domain name included in the name resolution request, and transmits, to the wireless station 41, a name resolution response including an address corresponding to the domain name.

When accepting an activation request from the wireless station 41 connected to the closed network 10, the closed-system activation server 15 registers activation information including the unique information of the wireless station 41 in the storage devices 17 and 27 installed in the closed system 11 and the cloud system 21, respectively.

The storage device 17 is a database (DB) server storing the activation information, such as a NoSQL server.

The router 16 transmits data received from the cloud system 21 or the closed network 10 to the closed-system device included in the closed system 11 in accordance with the destination of the data.

The dedicated connection device 26 includes, for example, a virtual interface connected to the closed system 11 and the closed network 10 via dedicated lines. The dedicated connection device 26 transmits, to the cloud-system device included in the cloud system 21, data received from the closed system 11 or the closed network 10 having the above-described configuration in accordance with the type of the data.

Specifically, data transmitted from the wireless station 41 connected to the closed network 10 or the closed-system device included in the closed system 11 reaches the dedicated connection device 26. The dedicated connection device 26 transfers the received data to the cloud-system device in accordance with the type of the data. When receiving a provisioning request from the wireless station 41, the dedicated connection device 26 transfers the provisioning request to the cloud-system provisioning server 23 via a non-illustrated load balancing device.

The dedicated connection device 26 also transmits data received from the cloud-system device included in the cloud system 21 to the closed system 11 or the closed network 10 via the virtual interface.

The endpoint device 25 includes an interface connected to the Internet network 20. The endpoint device 25 transmits data received from the Internet network 20 to each device in the cloud system 21. Specifically, the endpoint device 25 transfers each type of request received from the Internet network 20, more specifically, each of the activation request, the provisioning request, and the registration request to a device according to the request type, that is, the cloud-system activation server 24, the cloud-system provisioning server 23, or the cloud-system gateway server 22. The endpoint device 25 also transfers data transmitted from each device in the cloud system 21 and destined to the wireless station 42 to the wireless station 42 via the Internet network 20.

The cloud-system gateway server 22 retains association between the wireless station 42 and the call control server 12. As an example, the cloud-system gateway server 22 retains a table in which unique information for uniquely identifying the wireless station 42 is associated with an address of the call control server 12. The unique information for uniquely identifying the wireless station 42 is, for example, an IMEI, an ICCID that is an identification number of a SIM card inserted to the wireless station 42, or the like.

When receiving a registration request or voice data from the wireless station 42 connected to the Internet network 20, the cloud-system gateway server 22 transmits the received registration request or voice data to the call control server 12 associated with the wireless station 42. When receiving a registration response or voice data from the call control server 12, the cloud-system gateway server 22 transmits the received registration response or voice data to the wireless station 42 that is a destination.

When receiving a provisioning request from the wireless station 41 or 42, the cloud-system provisioning server 23 transmits a provisioning response including a domain name of the corresponding gateway server to the wireless station 41 or 42.

When receiving, from the wireless station 42 connected to the Internet network 20, an authentication request including the unique information of the wireless station 42 and generation information of an encryption key, the cloud-system activation server 24 causes the activation information including the unique information and the generation information to be stored into a storage device installed in at least one of the closed system 11 and the cloud system 21, for example, the storage devices 17 and 27 installed in the closed system 11 and the cloud system 21, respectively.

The storage device 27 is a DB server storing the activation information, such as a NoSQL server.

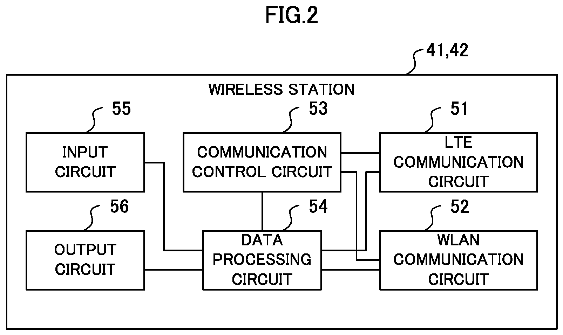

FIG. 2 illustrates a configuration of each of the wireless stations 41 and 42 that communicate with each other via the wireless communication system 1 having the above-described configuration. Each of the wireless stations 41 and 42 includes an LTE communication circuit 51, a WLAN communication circuit 52, a communication control circuit 53, a data processing circuit 54, an input circuit 55, and an output circuit 56. The LTE communication circuit 51 is connected to the closed network 10, and performs transmission and reception of closed network data conforming to a communication standard of the closed network 10. The WLAN communication circuit 52 is connected to the Internet network 20 via the WLAN device 32, and performs transmission and reception of communication data conforming to a communication standard of the Internet network 20. The communication control circuit 53 controls the LTE communication circuit 51 and the WLAN communication circuit 52 to establish voice communication.

The data processing circuit 54 generates, from transmission data generated by the input circuit 55, the closed network data to be transmitted from the LTE communication circuit 51 or the communication data to be transmitted from the WLAN communication circuit 52. The data processing circuit 54 generates reception data from the closed network data received by the LTE communication circuit 51 or the communication data received by the WLAN communication circuit 52, and outputs the reception data to the output circuit 56.

The input circuit 55 acquires voice signals from a non-illustrated microphone, performs signal processing, such as analog-to-digital (A-D) conversion, noise filtering, and amplification, to generate the transmission data, and transmits the generated transmission data to the data processing circuit 54.

The output circuit 56 performs signal processing, such as noise filtering, amplification, and digital-to-analog (D-A) conversion, on the reception data acquired from the data processing circuit 54 to generate voice data, and outputs the generated voice data from a non-illustrated speaker. The output circuit 56 may acquire a result of processing, such as activation, provisioning, or registration, from the data processing circuit 54, and display the result on a non-illustrated screen.

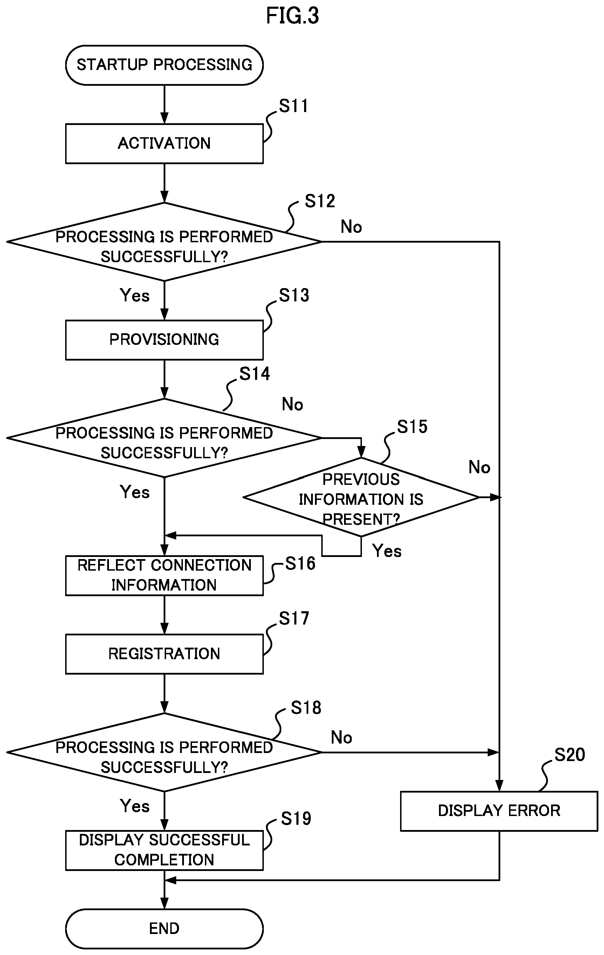

Each of the wireless stations 41 and 42 having the above-described configuration starts startup processing illustrated in FIG. 3 at startup such as power-on. The startup processing enables the wireless stations 41 and 42 to start voice communication.

The startup processing performed by the wireless station 41 connected to the closed network 10 is described below. The wireless station 41 performs activation that is setting for starting operation of the wireless station 41 (step S11).

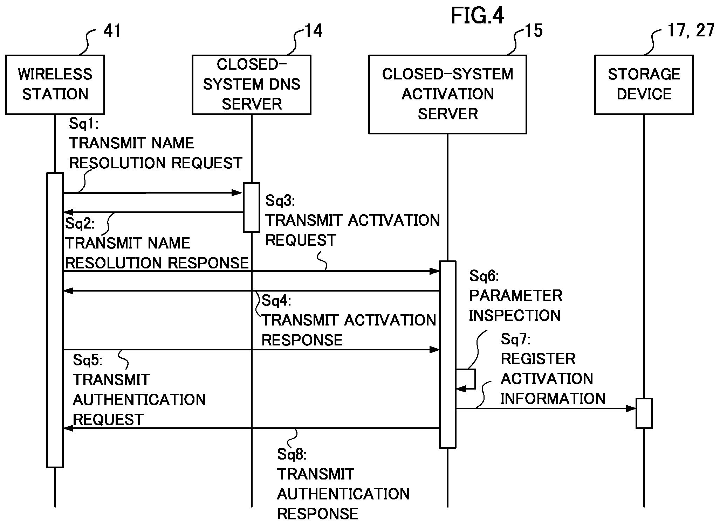

FIG. 4 illustrates details of activation processing performed by the wireless station 41. The wireless station 41 transmits, to the closed-system DNS server 14, a name resolution request including a domain name of the closed-system activation server 15 to be a destination of an activation request (sequence Sq1). Specifically, the wireless station 41 sets a transmission source IP address to an IP address of the wireless station 41, sets a destination IP address to an IP address of the closed-system DNS server 14, and generates and transmits the name resolution request including the domain name of the closed-system activation server 15. The wireless station 41 preliminarily retains the IP address of the closed-system DNS server 14. The name resolution request transmitted from the wireless station 41 reaches the closed-system DNS server 14 via the base station 31, the closed network 10, and the router 16.

When receiving the name resolution request including the domain name of the closed-system activation server 15, the closed-system DNS server 14 transmits, to the wireless station 41, a name resolution response including an address of the closed-system activation server 15 (sequence Sq2). Specifically, the closed-system DNS server 14 sets a transmission source IP address to the IP address of the closed-system DNS server 14, sets a destination IP address to the transmission source IP address of the name resolution request, and generates and transmits the name resolution response including the address of the closed-system activation server 15. The name resolution response transmitted from the closed-system activation server 15 reaches the wireless station 41 via the router 16, the closed network 10, and the base station 31.

When receiving the name resolution response, the wireless station 41 transmits the activation request to the closed-system activation server 15 (sequence Sq3). Specifically, the wireless station 41 sets a transmission source IP address to the IP address of the wireless station 41, sets a destination IP address to the address of the closed-system activation server 15 included in the name resolution response, and generates and transmits the activation request. The activation request transmitted from the wireless station 41 reaches the closed-system activation server 15 via the base station 31, the closed network 10, and the router 16.

When receiving the activation request, the closed-system activation server 15 transmits an activation response including a token to the wireless station 41 (sequence Sq4). Specifically, the closed-system activation server 15 sets a transmission source IP address to an IP address of the closed-system activation server 15, sets a destination IP address to the transmission source IP address of the activation request, that is, the IP address of the wireless station 41, and generates and transmits the activation response including the token. The activation response transmitted from the closed-system activation server 15 reaches the wireless station 41 via the router 16, the closed network 10, and the base station 31.

When receiving the activation response, the wireless station 41 extracts the token included in the activation response, and transmits, to the closed-system activation server 15, an authentication request including the unique information of the wireless station 41 and the token (sequence Sq5). Specifically, the wireless station 41 sets a transmission source IP address to the IP address of the wireless station 41, sets a destination IP address to the address of the closed-system activation server 15, and generates and transmits the authentication request including the unique information of the wireless station 41 and the token included in the activation response.

When receiving the authentication request, the closed-system activation server 15 performs, based on the unique information of the wireless station 41 and the token included in the authentication request, a parameter inspection to determine whether the authentication request is normal (sequence Sq6). When the determination result indicates that the authentication request is normal, the closed-system activation server 15 registers the activation information including the unique information of the wireless station 41 in the storage devices 17 and 27 (sequence Sq7). When the activation information has been registered, the closed-system activation server 15 transmits an authentication response (sequence Sq8). Specifically, the closed-system activation server 15 sets a transmission source IP address to the IP address of the closed-system activation server 15, sets a destination IP address to the transmission source IP address of the authentication request, that is, the IP address of the wireless station 41, and generates and transmits the authentication response.

For example, when the closed-system activation server 15 cannot access either the storage device 17 or 27 and the activation information has not been registered successfully, the closed-system activation server 15 transmits an error notification, such as a notification that activation has been canceled, to the wireless station 41 without transmitting the authentication response in sequence Sq8.

As illustrated in FIG. 3, when the activation processing has not been completed successfully (No in step S12), for example, when receiving the error notification from the closed-system activation server 15, the wireless station 41 displays, on the screen, a notification that an error occurs (step S20).

When the activation processing has been completed successfully (Yes in step S12), more specifically, when receiving the authentication response from the closed-system activation server 15, the wireless station 41 performs provisioning processing to acquire connection information (step S13).

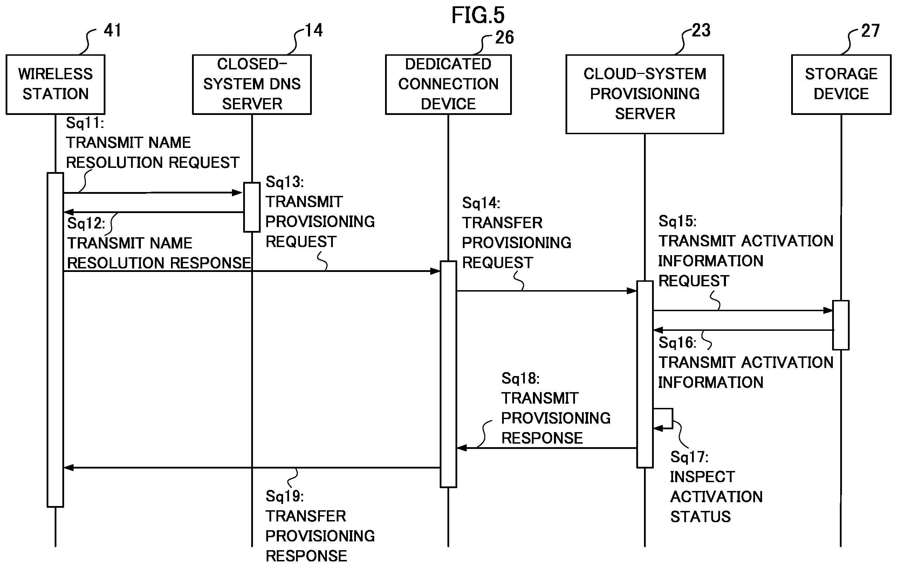

FIG. 5 illustrates details of the provisioning processing performed by the wireless station 41. The wireless station 41 transmits, to the closed-system DNS server 14, a name resolution request including a domain name of the dedicated connection device 26 to be a destination of a provisioning request (sequence Sq11).

When receiving the name resolution request including the domain name of the dedicated connection device 26, the closed-system DNS server 14 transmits, to the wireless station 41, a name resolution response including an address of the dedicated connection device 26 (sequence Sq12).

When receiving the name resolution response, the wireless station 41 transmits, to the dedicated connection device 26, the provisioning request including the unique information of the wireless station 41 (sequence Sq13). Specifically, the wireless station 41 sets a transmission source IP address to the IP address of the wireless station 41, sets a destination IP address to the address of the dedicated connection device 26 included in the name resolution response, and generates and transmits the provisioning request including the unique information of the wireless station 41.

When receiving the provisioning request, the dedicated connection device 26 transfers the provisioning request to the cloud-system provisioning server 23 (sequence Sq14). The provisioning request transmitted from the wireless station 41 reaches the cloud-system provisioning server 23 via the base station 31, the closed network 10, and the dedicated connection device 26.

When receiving the provisioning request, the cloud-system provisioning server 23 extracts the unique information of the wireless station 41 included in the provisioning request, and transmits, to the storage device 27, an activation information request for acquiring the activation information of the wireless station 41 (sequence Sq15). When receiving the activation information request, the storage device 27 transmits the activation information of the wireless station 41 to the cloud-system provisioning server 23 (sequence Sq16).

The cloud-system provisioning server 23 performs an activation status inspection to determine, based on the activation information acquired in sequence Sq16, whether activation of the wireless station 41 is performed successfully (sequence Sq17). When the activation is performed successfully, the cloud-system provisioning server 23 transmits, to the dedicated connection device 26, the provisioning response destined to the wireless station 41 and including the connection information for connection to the call control server 12 associated with the wireless station 41 (sequence Sq18). Specifically, the cloud-system provisioning server 23 sets a transmission source IP address to an IP address of the cloud-system provisioning server 23, sets a destination IP address to the transmission source IP address of the provisioning request, that is, the IP address of the wireless station 41, and generates and transmits the provisioning response including the connection information.

When receiving the provisioning response, the dedicated connection device 26 transfers the provisioning response to the wireless station 41 that is the destination (sequence Sq19). The provisioning response transmitted from the cloud-system provisioning server 23 reaches the wireless station 41 via the dedicated connection device 26, the closed network 10, and the base station 31.

For example, when the cloud-system provisioning server 23 cannot access the storage device 27 and cannot acquire the activation information, the cloud-system provisioning server 23 transmits an error notification destined to the wireless station 41 to the dedicated connection device 26 without transmitting the provisioning response in sequence Sq19. When receiving the error notification, the dedicated connection device 26 transfers the error notification to the wireless station 41.

As illustrated in FIG. 3, when the provisioning processing has not been completed successfully (No in step S14), for example, when the wireless station 41 receives the error notification from the cloud-system provisioning server 23 or cannot be connected to the cloud-system provisioning server 23, the wireless station 41 determines whether previous information that is the connection information acquired in the previous startup processing is present (step S15). When no previous information is present (No in step S15), the wireless station 41 displays, on the screen, a notification that an error occurs (step S20).

When the provisioning processing has not been completed successfully but the previous information is present (No in step S14 and Yes in step S15), or when the provisioning processing has been completed successfully (Yes in step S14), the wireless station 41 reflects the connection information acquired in step S13 or the previous information as the connection information in the wireless station 41 (step S16).

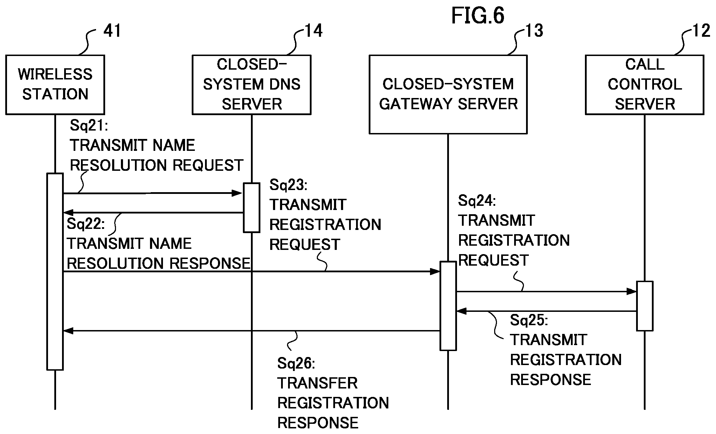

The wireless station 41 then performs registration to register information of the wireless station 41 in the call control server 12 (step S17). FIG. 6 illustrates details of the registration processing performed by the wireless station 41. The wireless station 41 transmits, to the closed-system DNS server 14, a name resolution request including a domain name of the closed-system gateway server 13 to be a destination of a registration request (sequence Sq21).

When receiving the name resolution request including the domain name of the closed-system gateway server 13, the closed-system DNS server 14 transmits, to the wireless station 41, a name resolution response including an address of the closed-system gateway server 13 (sequence Sq22).

When receiving the name resolution response, the wireless station 41 transmits the registration request to the closed-system gateway server 13 (sequence Sq23). Specifically, the wireless station 41 sets a transmission source IP address to the IP address of the wireless station 41, sets a destination IP address to the address of the closed-system gateway server 13 included in the name resolution response, and generates and transmits the registration request including the unique information of the wireless station 41. The registration request transmitted from the wireless station 41 reaches the closed-system gateway server 13 via the base station 31, the closed network 10, and the router 16.

When receiving the registration request, the closed-system gateway server 13 transmits the registration request including the unique information of the wireless station 41 to the call control server 12 associated with the wireless station 41 (sequence Sq24). The closed-system gateway server 13 retains the transmission source address of the registration request and the unique information of the wireless station 41 included in the registration request in association with each other.

When receiving the registration request, the call control server 12 transmits the registration response including the unique information of the wireless station 41 to the closed-system gateway server 13 that is the transmission source of the registration request (sequence Sq25).

When receiving the registration response, the closed-system gateway server 13 transmits the registration response to the wireless station 41 (sequence Sq26). Specifically, the closed-system gateway server 13 sets a transmission source IP address to an IP address of the closed-system gateway server 13, sets a destination IP address to an IP address corresponding to the unique information of the wireless station 41 included in the registration response received from the call control server 12, and generates and transmits the registration response. The registration response transmitted from the closed-system gateway server 13 reaches the wireless station 41 via the router 16, the closed network 10, and the base station 31.

As illustrated in FIG. 3, when the registration processing has not been completed successfully (No in step S18), for example, when the wireless station 41 cannot receive the registration response from the closed-system gateway server 13 within a predetermined period, the wireless station 41 displays, on the screen, a notification that an error occurs (step S20). The predetermined period may be determined in accordance with a time needed to send a registration request and receive a registration response under normal conditions, an acceptable length of downtime, or the like.

When the registration processing has been completed successfully (Yes in step S18), more specifically, when the wireless station 41 receives the registration response from the closed-system gateway server 13, the wireless station 41 displays, on the screen, a notification that the startup processing has been completed successfully (step S19). After the notification that the startup processing has been completed successfully has been displayed on the screen in step S19, the wireless station 41 can start voice communication. After completion of step S19 or S20, the wireless station 41 ends the startup processing.

The startup processing of the wireless station 42 is performed in the same manner as illustrated in FIG. 3. Processing for each of activation, provisioning, and registration performed by the wireless station 42 are described in detail below.

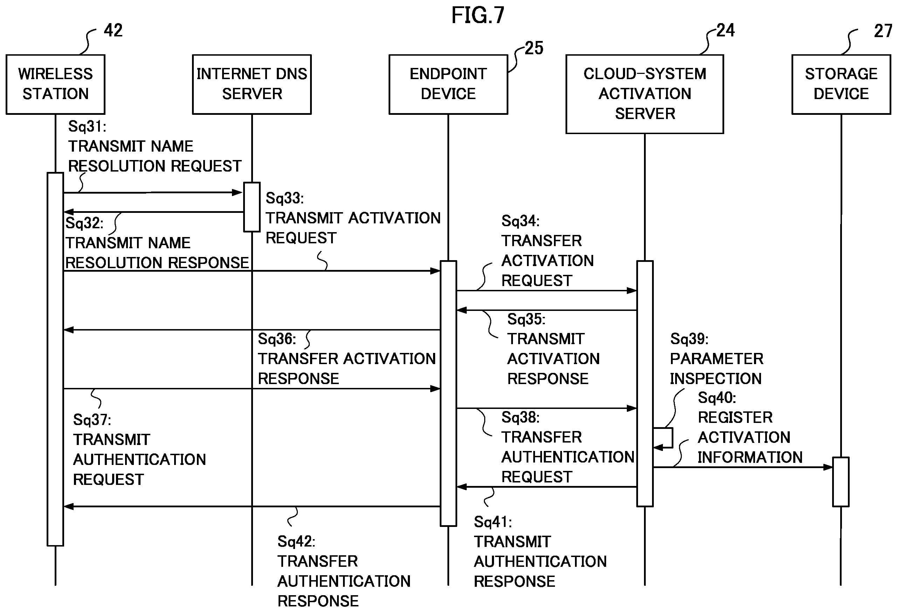

FIG. 7 illustrates details of the activation processing performed by the wireless station 42. The wireless station 42 transmits, to the Internet DNS server on the Internet network 20 not illustrated in FIG. 1, a name resolution request including a domain name of the endpoint device 25 to be a destination of an activation request (sequence Sq31). When receiving the name resolution request including the domain name of the endpoint device 25, the Internet DNS server transmits, to the wireless station 42, a name resolution response including an address of the endpoint device 25 (sequence Sq32).

When receiving the name resolution response, the wireless station 42 transmits the activation request to the endpoint device 25 (sequence Sq33). Specifically, the wireless station 42 sets a transmission source IP address to an IP address of the wireless station 42, sets a destination IP address to the address of the endpoint device 25 included in the name resolution response, and generates and transmits the activation request.

When receiving the activation request, the endpoint device 25 transfers the activation request to the cloud-system activation server 24 (sequence Sq34). The activation request transmitted from the wireless station 42 reaches the cloud-system activation server 24 via the WLAN device 32, the Internet network 20, and the endpoint device 25.

When receiving the activation request, the cloud-system activation server 24 transmits, to the endpoint device 25, an activation response destined to the wireless station 42 and including a token (sequence Sq35). Specifically, the cloud-system activation server 24 sets a transmission source IP address to an IP address of the cloud-system activation server 24, sets a destination IP address to the transmission source IP address of the activation request, that is, the IP address of the wireless station 42, and generates and transmits the activation response including the token.

When receiving the activation response, the endpoint device 25 transfers the activation response to the wireless station 42 that is the destination (sequence Sq36). The activation response transmitted from the cloud-system activation server 24 reaches the wireless station 42 via the endpoint device 25, the Internet network 20, and the WLAN device 32.

When receiving the activation response, the wireless station 42 extracts the token included in the activation response, and transmits, to the endpoint device 25, an authentication request including the unique information of the wireless station 42 and the token (sequence Sq37). Specifically, the wireless station 42 sets a transmission source IP address to the IP address of the wireless station 42, sets a destination IP address to the address of the endpoint device 25, and generates and transmits the authentication request including the unique information of the wireless station 42 and the token included in the activation response.

When receiving the authentication request, the endpoint device 25 transfers the authentication request to the cloud-system activation server 24 (sequence Sq38).

When receiving the authentication request, the cloud-system activation server 24 performs, based on the unique information of the wireless station 42 and the token included in the authentication request, a parameter inspection to determine whether the authentication request is normal (sequence Sq39). When the determination result indicates that the authentication request is normal, the cloud-system activation server 24 registers the activation information including the unique information of the wireless station 42 in the storage devices 17 and 27 (sequence Sq40). When the activation information has been registered, the cloud-system activation server 24 transmits an authentication response (sequence Sq41). Specifically, the cloud-system activation server 24 sets a transmission source IP address to the IP address of the cloud-system activation server 24, sets a destination IP address to the transmission source IP address of the authentication request, that is, the IP address of the wireless station 42, and generates and transmits the authentication response.

When receiving the authentication response, the endpoint device 25 transfers the authentication response to the wireless station 42 that is a destination (sequence Sq42).

For example, when the cloud-system activation server 24 cannot access either the storage device 17 or 27 and the activation information has not been registered successfully, the cloud-system activation server 24 transmits an error notification, such as a notification that activation has been canceled, to the endpoint device 25 without transmitting the authentication response in sequence Sq41. When receiving the error notification, the endpoint device 25 transfers the error notification to the wireless station 42 that is a destination.

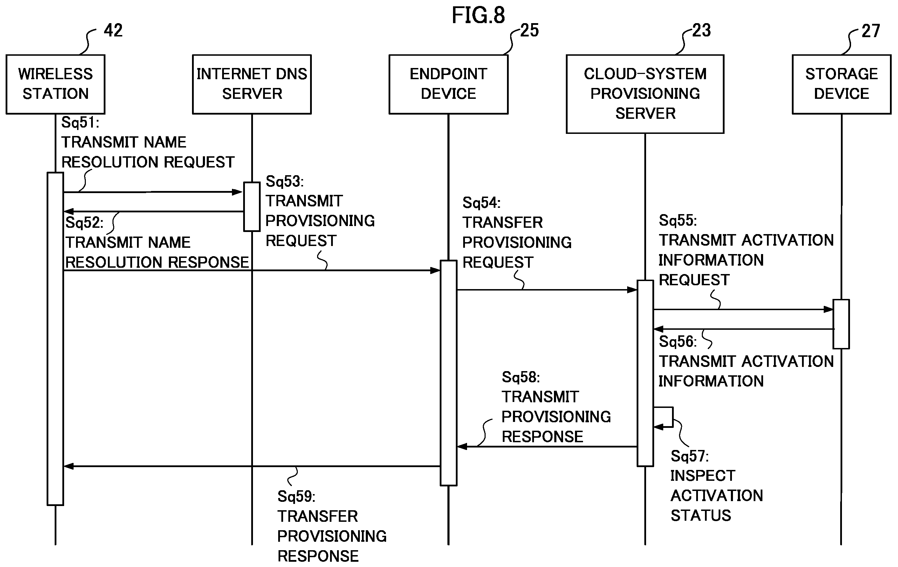

FIG. 8 illustrates details of the provisioning processing performed by the wireless station 42. The wireless station 42 transmits, to the Internet DNS server, a name resolution request including the domain name of the endpoint device 25 to be a destination of a provisioning request (sequence Sq51).

When receiving the name resolution request including the domain name of the endpoint device 25, the Internet DNS server transmits, to the wireless station 42, a name resolution response including the address of the endpoint device 25 (sequence Sq52).

When receiving the name resolution response, the wireless station 42 transmits, to the endpoint device 25, the provisioning request including the unique information of the wireless station 42 (sequence Sq53). Specifically, the wireless station 42 sets a transmission source IP address to the IP address of the wireless station 42, sets a destination IP address to the address of the endpoint device 25 included in the name resolution response, and generates and transmits the provisioning request including the unique information of the wireless station 42.

When receiving the provisioning request, the endpoint device 25 transfers the provisioning request to the cloud-system provisioning server 23 (sequence Sq54). The provisioning request transmitted from the wireless station 42 reaches the cloud-system provisioning server 23 via the WLAN device 32, the Internet network 20, and the endpoint device 25.

When receiving the provisioning request, the cloud-system provisioning server 23 extracts the unique information of the wireless station 42 included in the provisioning request, and transmits, to the storage device 27, an activation information request for acquiring the activation information of the wireless station 42 (sequence Sq55). When receiving the activation information request, the storage device 27 transmits the activation information of the wireless station 42 to the cloud-system provisioning server 23 (sequence Sq56).

The cloud-system provisioning server 23 performs an activation status inspection to determine, based on the activation information acquired in sequence Sq56, whether activation of the wireless station 42 is performed successfully (sequence Sq57). When the activation is performed successfully, the cloud-system provisioning server 23 transmits, to the endpoint device 25, the provisioning response destined to the wireless station 42 and including the connection information for connection to the call control server 12 associated with the wireless station 42 (sequence Sq58). Specifically, the cloud-system provisioning server 23 sets a transmission source IP address to the IP address of the cloud-system provisioning server 23, sets a destination IP address to the transmission source IP address of the provisioning request, that is, the IP address of the wireless station 42, and generates and transmits the provisioning response including the connection information.

When receiving the provisioning response, the endpoint device 25 transfers the provisioning response to the wireless station 42 that is the destination (sequence Sq59). The provisioning response transmitted from the cloud-system provisioning server 23 reaches the wireless station 42 via the endpoint device 25, the Internet network 20, and the WLAN device 32.

For example, when the cloud-system provisioning server 23 cannot access the storage device 27 and cannot acquire the activation information, the cloud-system provisioning server 23 transmits an error notification to the endpoint device 25 without transmitting the provisioning response in sequence Sq58. When receiving the error notification, the endpoint device 25 transfers the error notification to the wireless station 42.

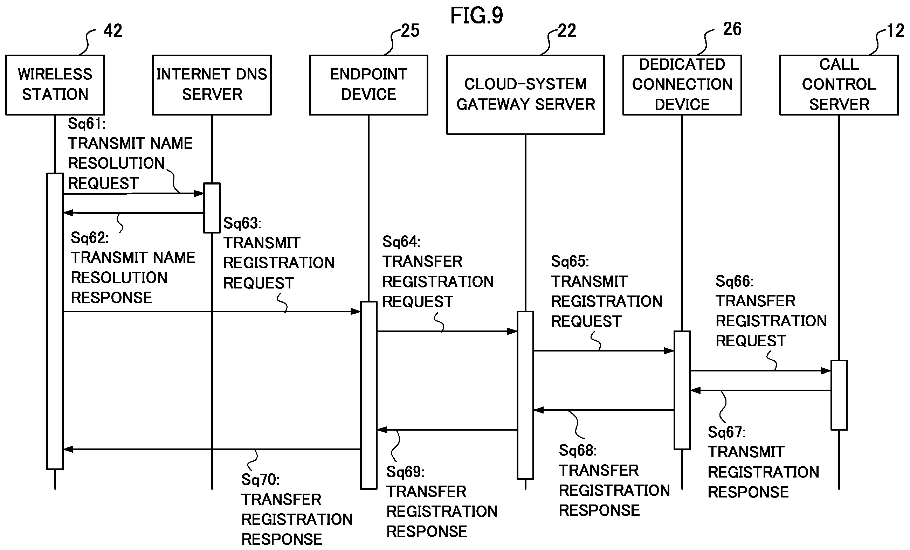

FIG. 9 illustrates details of the registration processing performed by the wireless station 42. The wireless station 42 transmits, to the Internet DNS server, a name resolution request including the domain name of the endpoint device 25 to be a destination of a registration request (sequence Sq61). When receiving the name resolution request including the domain name of the endpoint device 25, the Internet DNS server transmits, to the wireless station 42, a name resolution response including the address of the endpoint device 25 (sequence Sq62).

When receiving the name resolution response, the wireless station 42 transmits the registration request to the endpoint device 25 (sequence Sq63). Specifically, the wireless station 42 sets a transmission source IP address to the IP address of the wireless station 42, sets a destination IP address to the address of the endpoint device 25 included in the name resolution response, and generates and transmits the registration request including the unique information of the wireless station 42.

When receiving the registration request, the endpoint device 25 transfers the registration request to the cloud-system gateway server 22 (sequence Sq64). The registration request transmitted from the wireless station 42 reaches the cloud-system gateway server 22 via the WLAN device 32, the Internet network 20, and the endpoint device 25.

When receiving the registration request, the cloud-system gateway server 22 transmits, to the dedicated connection device 26, the registration request including the unique information of the wireless station 42 and destined to the call control server 12 associated with the wireless station 42 (sequence Sq65). The cloud-system gateway server 22 retains the transmission source address of the registration request and the unique information of the wireless station 42 included in the registration request in association with each other.

When receiving the registration request, the dedicated connection device 26 transfers the registration request to the call control server 12 (sequence Sq66). The registration request transmitted from the cloud-system gateway server 22 reaches the call control server 12 via the dedicated connection device 26 and the router 16.

When receiving the registration request, the call control server 12 transmits, to the dedicated connection device 26, a registration response including the unique information of the wireless station 42 and destined to the cloud-system gateway server 22 that is the transmission source of the registration request (sequence Sq67).

When receiving the registration response, the dedicated connection device 26 transfers the registration response to the cloud-system gateway server 22 (sequence Sq68). The registration response transmitted from the call control server 12 reaches the cloud-system gateway server 22 via the router 16 and the dedicated connection device 26.

When receiving the registration response, the cloud-system gateway server 22 transmits, to the endpoint device 25, the registration response destined to the wireless station 42 (sequence Sq69). Specifically, the cloud-system gateway server 22 sets a transmission source IP address to an IP address of the cloud-system gateway server 22, sets a destination IP address to an IP address corresponding to the unique information of the wireless station 42 included in the registration response received from the call control server 12, and generates and transmits the registration response.

When receiving the registration response, the endpoint device 25 transfers the registration response to the wireless station 42 that is the destination (sequence Sq70). The registration response transmitted from the cloud-system gateway server 22 reaches the wireless station 42 via the endpoint device 25, the Internet network 20, and the WLAN device 32.

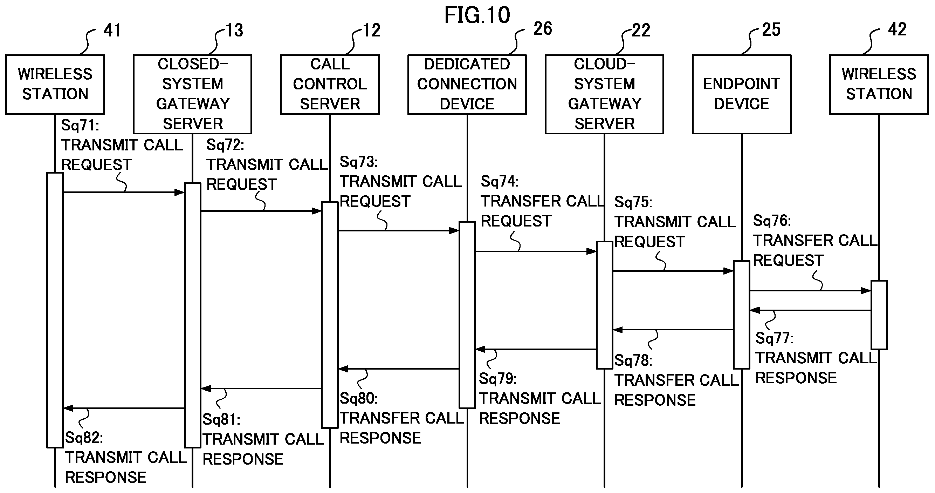

Completion of the startup processing of the wireless stations 41 and 42 as described above enables voice communication between the wireless stations 41 and 42. FIG. 10 illustrates an example in which the wireless station 41 requests a call with the wireless station 42. The wireless station 41 transmits, to the closed-system gateway server 13, a call request designating the wireless station 42 as a call destination, more specifically, a call request including an ID of the wireless station 42 as a destination ID (sequence Sq71). When receiving the call request, the closed-system gateway server 13 transmits the call request to the call control server 12 (sequence Sq72).

Each of the call control server 12 retains association between a destination ID and the closed-system gateway server 13 or the cloud-system gateway server 22. The wireless station 42 being the destination is connected to the Internet network 20, and is thus associated with the cloud-system gateway server 22. Thus, when receiving the above-described call request, the call control server 12 transmits, to the dedicated connection device 26, the call request destined to the cloud-system gateway server 22 associated with the wireless station 42 that is the call destination (sequence Sq73). The call request reaches the dedicated connection device 26 from the call control server 12 via the router 16. When receiving the call request, the dedicated connection device 26 transfers the call request to the cloud-system gateway server 22 that is the destination (sequence Sq74).

When receiving the call request, the cloud-system gateway server 22 transmits, to the endpoint device 25, the call request destined to the wireless station 42 that is the call destination (sequence Sq75). When receiving the call request, the endpoint device 25 transfers the call request to the wireless station 42 that is the destination (sequence Sq76).

When receiving the call request, the wireless station 42 generates a call response destined to the wireless station 41 that is the transmission source of the call request, and transmits the call response to the endpoint device 25 (sequence Sq77). When receiving the call response, the endpoint device 25 transfers the call response to the cloud-system gateway server 22 (sequence Sq78). When receiving the call response destined to the wireless station 41, the cloud-system gateway server 22 transmits, to the dedicated connection device 26, the call response destined to the call control server 12 associated with the wireless station 41 (sequence Sq79). When receiving the call response, the dedicated connection device 26 transfers the call response to the call control server 12 that is the destination (sequence Sq80).

When receiving the call response, the call control server 12 transmits the call response to the closed-system gateway server 13 associated with the wireless station 41 that is the destination (sequence Sq81). When receiving the call response, the closed-system gateway server 13 transmits the call response to the wireless station 41 that is the destination (sequence Sq82). Establishment of a call session as described above enables voice communication between the wireless stations 41 and 42. Transfer of voice data is performed in the same manner as illustrated in FIG. 10.

As described above, in the wireless communication system 1 according to Embodiment 1, the closed-system DNS server 14 performs the name resolution, the closed-system gateway server 13 transmits the registration request or voice data to the call control server 12 associated with the wireless station 41, and the cloud-system gateway server 22 transmits the registration request or voice data to the call control server 12 associated with the wireless station 42. This enables a call between the wireless station 41 connected to the closed network 10 and the wireless station 42 connected to the Internet network 20.

The wireless station 41 when being connected to the Internet network 20 performs the same operations as the wireless station 42 described above. The wireless station 42 when being connected to the closed network 10 performs the same operations as the wireless station 41 described above. This enables the wireless stations 41 and 42 to be connected to the call control server 12 and perform voice communication with other wireless stations regardless of whether each of the wireless stations 41 and 42 is connected to the closed network 10 or the Internet network 20. In other words, the call control server 12 controls voice communication between the wireless stations 41 and 42 regardless of whether the wireless station 41 or 42 associated with the call control server 12 is connected to the closed network 10 or the Internet network 20.

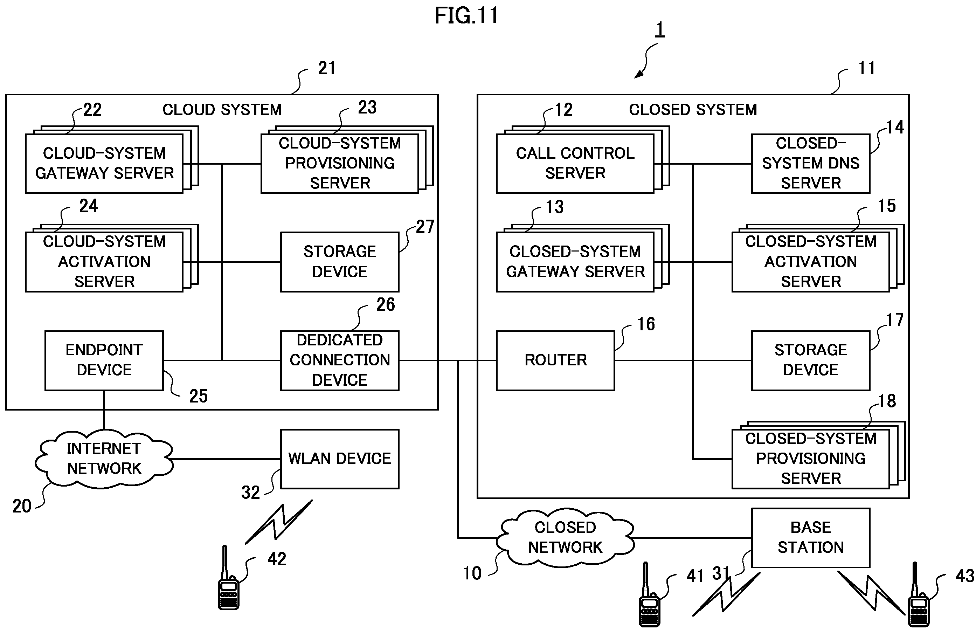

In addition to the above-described embodiment, various modifications may be made to the wireless communication system 1 according to Embodiment 1. First, the configuration of the closed system 11 is not limited to the above-described example. As an example, as illustrated in FIG. 11, the closed system 11 further includes a closed-system provisioning server 18 that provides a wireless station 43 connected to the closed network 10 alone with connection information. In the example in FIG. 11, the wireless stations 41, 42, and 43 are distinguished by referring to the wireless stations 41 and 42 connectable to the closed network 10 and the Internet network 20 as first wireless stations 41 and 42, and referring to the wireless station 43 connectable to the closed network 10 alone as a second wireless station 43.

The closed-system provisioning server 18 retains the connection information for connecting the second wireless station 43 to the call control server 12 associated with the second wireless station 43. The second wireless station 43 preliminarily retains an IP address of the closed-system provisioning server 18. The second wireless station 43 at startup transmits a provisioning request to the closed-system provisioning server 18, receives, from the closed-system provisioning server 18, a provisioning response including the address of the call control server 12, and reflects setting information. This enables the second wireless station 43 to be connected to the call control server 12 via the base station 31 and the closed network 10 and perform voice communication with the wireless stations 41 and 42.

Second, the closed system 11 may have any number of respective closed-system devices. In addition, processing performed by each of the closed-system devices may be performed in a distributed manner. As an example, the closed system 11 may include a plurality of closed-system gateway servers 13, and the processing performed in registration by the closed-system gateway server 13 may be performed by the plurality of closed-system gateway servers 13 to distribute the load. The cloud system 21 may have any number of respective cloud-system devices. In addition, processing performed by each of the cloud-system devices may be performed in such a manner as to distribute the load. As an example, the cloud system 21 may include a plurality of cloud-system gateway servers 22, and the processing performed in registration by the cloud-system gateway server 22 may be performed by the plurality of cloud-system gateway servers 22 to distribute the load.

Third, the closed-system activation server 15 may register the activation information in the storage device 27 alone that is a master DB. In this configuration, data may be periodically reflected from the storage device 27 being the master DB to the storage device 17 being a replica DB.

### Embodiment 2

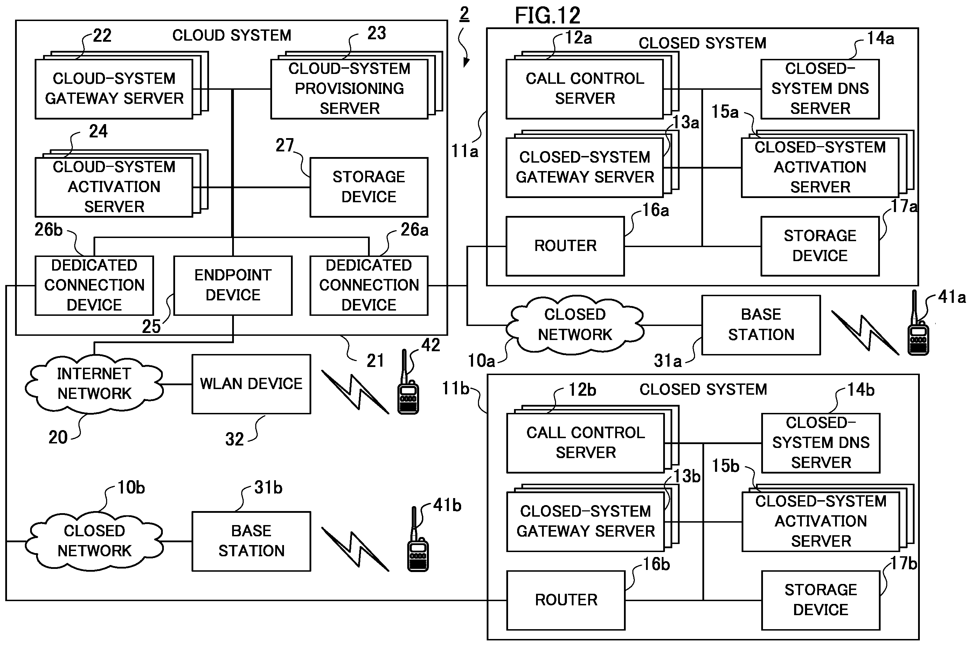

The wireless communication system may include a plurality of closed systems. As illustrated in FIG. 12, a wireless communication system 2 according to Embodiment 2 includes a closed system 11a installed in a closed network 10a, a closed system 11b installed in a closed network 10b, and the cloud system 21.

The closed systems 11a and 11b have the same configuration as the closed system 11 included in the wireless communication system 1 according to Embodiment 1. Specifically, the closed system 11a includes a call control server 12a, a closed-system gateway server 13a, a closed-system DNS server 14a, a closed-system activation server 15a, a router 16a, and a storage device 17a. The closed system 11b includes a call control server 12b, a closed-system gateway server 13b, a closed-system DNS server 14b, a closed-system activation server 15b, a router 16b, and a storage device 17b.

The cloud system 21 has a configuration different from that of the cloud system 21 included in the wireless communication system 1 according to Embodiment 1. The cloud system 21 includes dedicated connection devices 26a and 26b corresponding to the closed systems 11a and 11b, respectively. Specifically, the dedicated connection device 26a connects, via a dedicated line, each of the cloud-system devices included in the cloud system 21 to the closed-system devices included in the closed system 11a and the closed network 10a. The dedicated connection device 26b connects, via a dedicated line, each of the cloud-system devices included in the cloud system 21 to the closed-system devices included in the closed system 11b and the closed network 10b.

Wireless stations 41a, 41b, and 42 can perform voice communication with one another via the wireless communication system 2. Startup processing performed by the wireless stations 41a, 41b, and 42 is the same as that in Embodiment 1. The wireless stations 41a and 41b are associated with the closed systems 11a and 11b, respectively. When the wireless station 41a cannot be connected to the call control server 12a included in the wireless station 11a, the wireless station 41a is connected to the call control server 12b included in the closed system 11b via the cloud system 21. Similarly, when the wireless station 41b cannot be connected to the call control server 12b included in the closed system 11b, the wireless station 41b is connected to the call control server 12a included in the closed system 11a via the cloud system 21. The wireless station 42 is preferentially connected to one of the call control server 12a in the closed system 11a or the call control server 12b in the closed system 11b. When the wireless station 42 cannot be connected to the one of the call control servers 12a and 12b, the wireless station 42 is connected to the other of the call control servers 12a and 12b.

Specifically, the wireless station 41a performs the activation processing illustrated in FIG. 4 on the closed-system activation server 15a, performs the provisioning processing illustrated in FIG. 5 on the cloud-system provisioning server 23, and performs the registration processing illustrated in FIG. 6 on the call control server 12a via the closed-system gateway server 13a. When performing processing for each of activation, provisioning, and registration, the wireless station 41a requests name resolution for the closed-system DNS server 14a.

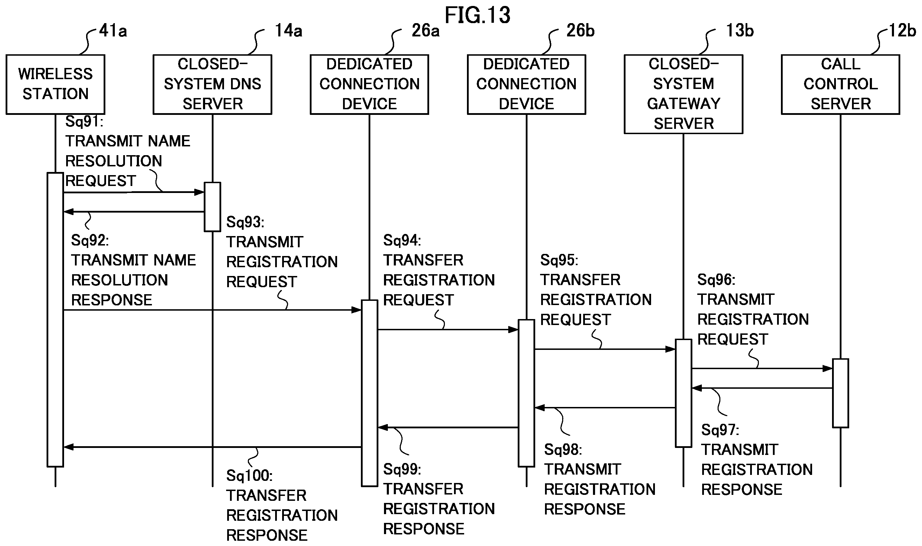

When the wireless station 41a performs the registration processing illustrated in FIG. 6 and cannot receive the registration response from the closed-system gateway server 13a within the predetermined period, the wireless station 41a displays an error on the screen. The wireless station 41a then performs the registration processing on the call control server 12b as illustrated in FIG. 13. The wireless station 41a transmits, to the closed-system DNS server 14a, a name resolution request including a domain name of the closed-system gateway server 13b to be a destination of a registration request (sequence Sq91).

When receiving the name resolution request including the domain name of the closed-system gateway server 13b, the closed-system DNS server 14a transmits, to the wireless station 41, a name resolution response including an address of the dedicated connection device 26a (sequence Sq92).

When receiving the name resolution response, the wireless station 41a transmits the registration request to the dedicated connection device 26a (sequence Sq93). Specifically, the wireless station 41a sets a transmission source IP address to an IP address of the wireless station 41a, sets a destination IP address to the address of the dedicated connection device 26a included in the name resolution response, and generates and transmits the registration request including unique information of the wireless station 41a.

When receiving the registration request, the dedicated connection device 26a transfers the registration request to the dedicated connection device 26b (sequence Sq94). When receiving the registration request, the dedicated connection device 26b transfers the registration request to the closed-system gateway server 13b (sequence Sq95).

When receiving the registration request, the closed-system gateway server 13b transmits, to the call control server 12b, the registration request including the unique information of the wireless station 41a (sequence Sq96). The closed-system gateway server 13b retains the transmission source address of the registration request and the unique information of the wireless station 41a included in the registration request in association with each other.

When receiving the registration request, the call control server 12b transmits the registration response including the unique information of the wireless station 41a to the closed-system gateway server 13b that is the transmission source of the registration request (sequence Sq97).

When receiving the registration response, the closed-system gateway server 13b transmits the registration response to the dedicated connection device 26b (sequence Sq98). Specifically, the closed-system gateway server 13b sets a transmission source IP address to an IP address of the closed-system gateway server 13b, sets a destination IP address to an IP address corresponding to the unique information of the wireless station 41a included in the registration response received from the call control server 12b, and generates and transmits the registration response.

When receiving the registration response, the dedicated connection device 26b transfers the registration response to the dedicated connection device 26a (sequence Sq99). When receiving the registration response, the dedicated connection device 26a transfers the registration response to the wireless station 41a (sequence Sq100).

As described above, when the wireless station 41a cannot perform the registration processing on the call control server 12a, the wireless station 41a performs the registration processing on the call control server 12b and thereby can be connected to the call control server 12b and establish voice communication.

The same applies to the wireless station 41b. Specifically, the wireless station 41b performs the activation processing illustrated in FIG. 4 on the closed-system activation server 15b, performs the provisioning processing illustrated in FIG. 5 on the cloud-system provisioning server 23, and performs the registration processing illustrated in FIG. 6 on the call control server 12b via the closed-system gateway server 13b. When performing processing for each of activation, provisioning, and registration, the wireless station 41b requests name resolution for the closed-system DNS server 14b.

When the wireless station 41b performs the registration processing illustrated in FIG. 6 and cannot receive the registration response from the closed-system gateway server 13b within the predetermined period, the wireless station 41b displays an error on the screen. The wireless station 41b then performs the registration processing on the call control server 12a as illustrated in FIG. 13. This enables the wireless station 41b to be connected to the call control server 12a and establish voice communication.

When the wireless station 42 performs the registration processing illustrated in FIG. 9 on the call control server 12a in the same manner as in Embodiment 1 and cannot receive the registration response from the closed-system gateway server 13a within the predetermined period, the wireless station 42 displays an error on the screen. The wireless station 42 then performs the registration processing illustrated in FIG. 9 on the call control server 12b. The registration processing enables the wireless station 42 to be connected to the call control server 12b and establish voice communication.

As described above, in the wireless communication system 2 according to Embodiment 2, when the wireless stations 41a, 41b, and 42 cannot be connected to one of the call control servers 12a and 12b, the wireless stations 41a, 41b, and 42 are connected to the other of the call control servers 12a and 12b, thereby enabling voice communication. In other words, when one of the call control servers 12a and 12b cannot control communication among the wireless stations 41a, 41b, and 42, the other of the call control servers 12a and 12b controls the communication among the wireless stations 41a, 41b, and 42. Thus, the wireless communication system 2 has higher availability than the wireless communication system 1 according to Embodiment 1.

In addition to the above-described embodiment, various modifications may be made to the wireless communication system 2 according to Embodiment 2. The number of the closed systems is not limited to the above-described example, and may be any natural number of two or more.

The modified examples described in Embodiment 1 are also applicable to Embodiment 2. Specifically, each of the closed systems 11a and 11b may further include the closed-system provisioning server 18.

Each of the closed systems 11a and 11b may have any number of respective closed-system devices. The cloud system 21 may have any number of respective cloud-system devices.

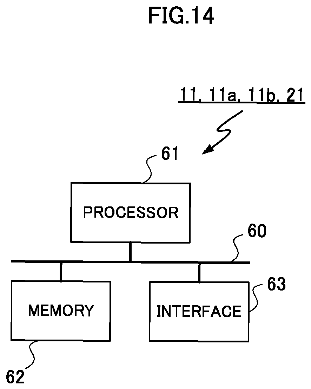

FIG. 14 illustrates an example of a hardware configuration for implementing the above-described wireless communication systems 1 and 2. The closed-system devices included in the closed systems 11, 11a, and 11b and the cloud-system devices included in the cloud system 21 are implemented by a processor 61, a memory 62, and an interface 63. The processor 61, the memory 62, and the interface 63 are connected to one another by a bus 60. The processor 61 includes any electronic circuit or the like including a transistor, and is considered as a circuit or processing circuitry.

For example, the functions of the closed-system devices in the closed systems 11, 11a, and 11b and the cloud-system devices in the cloud system 21 are implemented by software, firmware that is software incorporated in an electronic device, or a combination of software and firmware. The software is described as a program and stored in the memory 62. The processor 61 executes the program stored in the memory 62 to implement the functions of the above-described components. That is, the memory 62 stores the program for performing processing of each of the closed-system devices in the closed systems 11, 11a, and 11b and the cloud-system devices in the cloud system 21.

The memory 62 is, for example, a nonvolatile or volatile semiconductor memory such as a random-access memory (RAM), a read-only memory (ROM), a flash memory, an erasable programmable ROM (EPROM), or an electrically erasable programmable ROM (EEPROM), a magnetic disk, a flexible disk, an optical disc, a compact disc, a minidisc, a digital versatile disc (DVD), or the like.

For example, the interface 63 is a component to connect the closed systems 11, 11a, and 11b to the cloud system 21 or the wireless stations 41, 41a, and 41b, connect the cloud system 21 to the wireless station 42, and establish voice communication. The interface 63 has a plurality of types of interface modules as needed basis.

Although FIG. 14 illustrates one processor 61 and one memory 62, the closed-system devices in the closed systems 11, 11a, and 11b and the cloud-system devices in the cloud system 21 may be implemented by a plurality of processors 61 and a plurality of memories 62. In this configuration, the functions of the devices in the closed systems 11, 11a, and 11b and the cloud system 21 may be implemented by the plurality of processors 61 and the plurality of memories 62 cooperating with one another.

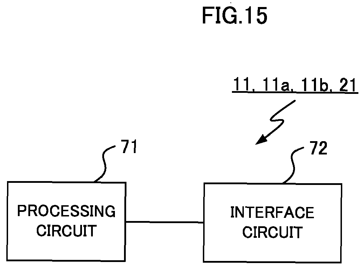

As illustrated in FIG. 15, the devices in the closed systems 11, 11a, and 11b and the cloud system 21 may be implemented by a processing circuit 71. The processing circuit 71 is connected to another device via an interface circuit 72.

When the processing circuit 71 is dedicated hardware, the processing circuit 71 has a single circuit, a composite circuit, a processor, an application specific integrated circuit (ASIC), a field programmable gate array (FPGA), or a combination thereof. The closed-system devices in the closed systems 11, 11a, and 11b and the cloud-system devices in the cloud system 21 may be implemented by any number of processing circuits 71.

A configuration may be employed in which some of the functions of the closed-system devices in the closed systems 11, 11a, and 11b and the cloud-system devices in the cloud system 21 are implemented by the dedicated hardware and the others are implemented by the software or firmware. For example, in the closed system 11, a configuration may be employed in which the call control server 12, the closed-system gateway server 13, the closed-system DNS server 14, and the closed-system activation server 15 are implemented by the processor 61 illustrated in FIG. 14 reading and executing the program stored in the memory 62, and the router 16 and the storage device 17 are implemented by the processing circuit 71 illustrated in FIG. 15.

Additionally, the above-described hardware configurations and flowcharts are only examples and can be changed and modified arbitrarily.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

This application claims the benefit of Japanese Patent Application No. 2024-118865, filed on July 24, 2024, the entire disclosure of which is incorporated by reference herein.

### Reference Signs List

1, 2 Wireless communication system
10, 10a, 10b Closed network
11, 11a, 11b Closed system
12, 12a, 12b Call control server
13, 13a, 13b Closed-system gateway server
14, 14a, 14b Closed-system DNS server
15, 15a, 15b Closed-system activation server
16, 16a, 16b Router
17, 17a, 17b, 27 Storage device
18 Closed-system provisioning server
20 Internet network
21 Cloud system
22 Cloud-system gateway server
23 Cloud-system provisioning server
24 Cloud-system activation server
25 Endpoint device
26, 26a, 26b Dedicated connection device
31 Base station
32 WLAN device
41, 42 Wireless station (first wireless station)
41a, 41b Wireless station
43 Wireless station (second wireless station)
51 LTE communication circuit
52 WLAN communication circuit
53 Communication control circuit
54 Data processing circuit
55 Input circuit
56 Output circuit
60 Bus
61 Processor
62 Memory
63 Interface
71 Processing circuit
72 Interface circuit

## Claims

1. A wireless communication system including a closed system installed in a closed network and a cloud system installed in an Internet network, the closed system and the cloud system being communicably connected to each other, wherein
the closed system includes
a call control server to control communication between a plurality of wireless stations, each of the plurality of wireless stations being connected to the closed network or the Internet network,
a closed-system gateway server to retain association between a wireless station of the plurality of wireless stations and the call control server, when receiving a registration request or voice data from the wireless station connected to the closed network, transmit the registration request or the voice data to the call control server associated with the wireless station, and when receiving a registration response or voice data from the call control server, transmit the registration response or the voice data to the wireless station being a destination, and
a closed-system domain name system server to, when receiving a name resolution request for a domain name of one of closed-system devices included in the closed system or one of cloud-system devices included in the cloud system from the wireless station connected to the closed network, perform name resolution for the domain name included in the name resolution request and transmit, to the wireless station, a name resolution response including an address corresponding to the domain name, and
the cloud system includes
a cloud-system gateway server to retain association between a wireless station of the plurality of wireless stations and the call control server, when receiving a registration request or voice data from the wireless station connected to the Internet network, transmit the registration request or the voice data to the call control server associated with the wireless station, and when receiving a registration response or voice data destined to the wireless station connected to the Internet network from the call control server, transmit the registration response or the voice data to the wireless station.

2. The wireless communication system according to claim 1, wherein,
when receiving the name resolution request for the closed-system gateway server being one of the closed-system devices from the wireless station connected to the closed network, the closed-system domain name system server transmits, to the wireless station, the name resolution response including an address of the closed-system gateway server.

3. The wireless communication system according to claim 1 or 2, wherein
the closed system further includes, as one of the closed-system devices, a closed-system activation server to, when accepting an activation request from the wireless station connected to the closed network, register activation information in storage devices respectively installed in the closed system and the cloud system, the activation information including information for uniquely identifying the wireless station.

4. The wireless communication system according to claim 3, wherein,
when receiving the name resolution request for the closed-system activation server being one of the closed-system devices from the wireless station connected to the closed network, the closed-system domain name system server transmits, to the wireless station, the name resolution response including an address of the closed-system activation server.

5. The wireless communication system according to any one of claims 1 to 4, wherein
the cloud system further includes, as one of the cloud-system devices, a cloud-system activation server to, when accepting an activation request including unique information for uniquely identifying the wireless station from the wireless station connected to the Internet network, register activation information including the unique information in storage devices respectively installed in the closed system and the cloud system.

6. The wireless communication system according to any one of claims 1 to 5, wherein
the cloud system further includes, as one of the cloud-system devices, a cloud-system provisioning server to, when receiving a provisioning request from the wireless station connected to the closed network, transmit a provisioning response including a domain name of the closed-system gateway server to the wireless station connected to the closed network, and when receiving a provisioning request from the wireless station connected to the Internet network, transmit a provisioning response including a domain name of the cloud-system gateway server to the wireless station connected to the Internet network.

7. The wireless communication system according to claim 6, wherein,
the cloud system further includes a dedicated connection device to connect, via a dedicated line, each of the cloud-system devices to the closed-system devices and the closed network,
the dedicated connection device transfers, to one of the cloud-system devices, data received from the wireless station connected to the closed network or one of the closed-system devices in accordance with a type of the data, and
when receiving the name resolution request for a domain name of the cloud-system provisioning server from the wireless station, the closed-system domain name system server transmits, to the wireless station, the name resolution response including an address of the dedicated connection device.

8. The wireless communication system according to any one of claims 1 to 7, wherein
the cloud system further includes a dedicated connection device to connect, via a dedicated line, each of the cloud-system devices to the closed-system devices and the closed network, and
the dedicated connection device transfers, to one of the cloud-system devices, data received from the wireless station connected to the closed network or one of the closed-system devices in accordance with a type of the data.

9. The wireless communication system according to any one of claims 1 to 8, wherein
the cloud system further includes an endpoint device to connect each of the cloud-system devices to the Internet network,
when receiving a name resolution request for one of the cloud-system devices from the wireless station connected to the Internet network, an Internet domain name system server installed in the Internet network transmits, to the wireless station, a name resolution response including an address of the endpoint device, and
the endpoint device transfers, to one of the cloud-system devices, data received from the wireless station connected to the Internet network in accordance with a type of the data.

10. The wireless communication system according to any one of claims 1 to 9, wherein
the call control server controls communication between at least one first wireless station and at least one second wireless station, the at least one first wireless station being connectable to both the closed network and the Internet network, the at least one second wireless station being connectable to the closed network alone, and
the closed system further includes a closed-system provisioning server to, when receiving a provisioning request from the at least one second wireless station connected to the closed network, transmit a provisioning response including an address of the call control server to the wireless station.

11. The wireless communication system according to any one of claims 1 to 10, wherein
the call control server controls communication of an associated wireless station of the plurality of wireless stations regardless of whether the associated wireless station is connected to the closed network or the Internet network.

12. The wireless communication system according to any one of claims 1 to 11, wherein
the wireless communication system includes a plurality of the closed systems to be communicably connected to each other via the cloud system, and
when the call control server included in one of the plurality of closed systems fails to control communication between the plurality of wireless stations, the call control server included in another one of the plurality of closed systems controls the communication between the plurality of wireless stations.

13. A communication method to be executed by a wireless communication system, the wireless communication system including a closed system installed in a closed network and a cloud system installed in an Internet network, the closed system and the cloud system being communicably connected to each other, the closed system including a call control server, a closed-system gateway server, and a closed-system domain name system server, the call control server being configured to control communication between a plurality of wireless stations each connected to the closed network or the Internet network, the closed-system gateway server being configured to retain association between a wireless station of the plurality of wireless stations and the call control server, the closed-system domain name system server being configured to perform name resolution, the cloud system including a cloud-system gateway server to retain association between a wireless station of the plurality of wireless stations and the call control server, the communication method comprising:
by the closed-system gateway server,
in response to receiving a registration request or voice data from the wireless station connected to the closed network, transmitting the registration request or the voice data to the call control server associated with the wireless station, and in response to receiving a registration response or voice data from the call control server, transmitting the registration response or the voice data to the wireless station being a destination;
by the closed-system domain name system server,
in response to receiving a name resolution request for a domain name of one of closed-system devices included in the closed system or one of cloud-system devices included in the cloud system from the wireless station connected to the closed network, performing name resolution for the domain name included in the name resolution request and transmitting, to the wireless station, a name resolution response including an address corresponding to the domain name; and
by the cloud-system gateway server,
retaining association between a wireless station of the plurality of wireless stations and the call control server, in response to receiving a registration request or voice data from the wireless station connected to the Internet network, transmitting the registration request or the voice data to the call control server associated with the wireless station, and in response to receiving a registration response or voice data destined to the wireless station connected to the Internet network from the call control server, transmitting the registration response or the voice data to the wireless station.
